# EUROPÄISCHE PATENTANMELDUNG

(11) **EP 0 796 773 A2**
(43) Veröffentlichungstag der Anmeldung: **24.09.1997**
(21) Anmeldenummer: 97104469.8
(22) Anmeldetag: 15.03.1997
(51) Int. Cl.: B60R 21/32, B60R 22/46

(54) **Insassenschutzsystem für Fahrzeuge zur Personenbeförderung**

(30) Priorität: 21.03.1996 DE 19611073
(71) Anmelder: TEMIC TELEFUNKEN microelectronic GmbH, 74072 Heilbronn (DE)
(72) Erfinder: Baur, Richard, 85276 Pfaffenhofen (DE); Fendt, Günter, 86529 Schrobenhausen (DE); Reisacher, Günter, 85051 Ingolstadt (DE)
(74) Vertreter: Maute, Hans-Jürgen, Dipl.-Ing.

(57) **Zusammenfassung**

Die Erfindung betrifft ein Insassenschutzsystem für Fahrzeuge zur Personenbeförderung mit einer Aufprallerkennungseinrichtung (10) zum Feststellen eines gefährlichen Aufpralls des Fahrzeugs, mit wenigstens einer einem bestimmten Sitz zugeordneten Schutzeinrichtung, die zumindest ein eine auf dem Sitz befindliche Person im Falle eines gefährlichen Aufpralls schützendes Mittel und eine diesem zugeordnete Auslöseeinrichtung umfaßt, der von der Aufprallerkennungseinrichtung ein Auslösesignal (A) zuführbar ist, und mit einer Sitzbelegungserkennungseinrichtung, die eine dem bestimmten Sitz zugeordnete Fühlereinheit und eine mit einem Ausgang der Fühlereinheit verbundene Auswerteschaltung (12) umfaßt, die ein Freigabesignal für die dem bestimmten Sitz zugeordnete Schutzeinrichtung an die Aufprallerkennungseinrichtung liefert, wenn die Auswertung der Ausgangssignale der Fühlereinrichtung ergibt, das der überwachte Sitz von einer Person belegt ist. Um bei einem Insassenschutzsystem eine zuverlässige Sitzbelegungserkennung auf einfache weise zu erreichen, ist vorgesehen, daß die Fühlereinheit der Sitzbelegungserkennungseinrichtung (18) so angeordnet ist, daß sie den Fußraum des zu überwachenden Sitzes beobachtet.

## Beschreibung

Die Erfindung betrifft ein Insassenschutzsystem für Fahrzeuge zur Personenbeförderung nach dem Oberbegriff des Patentanspruchs 1.

Derartige Insassenschutzsysteme umfassen im allgemeinen Rückhalteeinrichtungen für Personen, wie z.B. Airbags und/oder mit Gurtstraffern versehene Sicherheitsgurte, die jeweils einem bestimmten Sitz im Fahrzeug zugeordnet sind, um im Falle eines gefährlichen Unfalls zum Schutz einer auf dem jeweiligen Sitz befindlichen Person betätigt zu werden.

Während im Falle eines gefährlichen Aufpralls des Fahrzeugs die Rückhalteeinrichtungen für den Fahrer stets ausgelöst werden, ist eine Betätigung der Rückhaltevorrichtungen für den Beifahrer jedoch nur dann erforderlich, wenn der Beifahrersitz tatsächlich von einer Person belegt ist.

Bekannte Insassenschutzsysteme sind daher bereits mit einer Sitzbelegungserkennungseinrichtung mit Fühlereinheiten ausgerüstet, die, wenn der überwachte Sitz von einer zu schützenden Person belegt ist, ein Freigabesignal an das die Rückhalteeinrichtungen betätigende Auslösegerät liefert, um die Auslösung der entsprechenden Rückhalteeinrichtungen für den belegten Sitz freizugeben.

Dabei kann eine Sitzbelegungserkennungseinrichtung beispielsweise durch eine druckempfindliche Sensormatte gebildet sein, die sich im Beifahrersitz befindet und deren Ausgangssignal ausgewertet wird, um anhand des erfaßten Gewichts oder Drucks zu entscheiden, ob sich auf dem überwachten Sitz eine Person befindet. Das Prinzip der Gewichts- oder Druckauswertung hat jedoch den Nachteil, daß eine schwere Einkaufstasche oder dergleichen, die sich auf dem überwachten Sitz befindet, nicht immer von einer echten Person unterschieden werden kann, so daß sich im Falle eines gefährlichen Aufpralls eine an sich nicht erforderliche Auslösung der Rückhalteeinrichtungen aus Sicherheitsgründen nicht immer vermeiden läßt.

Aus der DE 40 23 109 A1 ist bereits ein Insassenschutzsystem bekannt, dessen Sitzbelegungserkennungseinrichtung zwei mit einem akustischen oder optischen Sensor und einem geeigneten Empfänger ausgerüstete Abstandsmeßeinrichtungen aufweist, so daß nicht nur die Sitzbelegung, sondern auch die Position eines Körperteils, z.B. des Kopfes, einer auf dem Beifahrersitz befindlichen Person relativ zur Rückhalteeinrichtung festgestellt werden kann.

Weiter wurde bereits vorgeschlagen, zur Sitzbelegungserkennung eine optische Bilderkennung durchzuführen. Hierfür ist eine entsprechende Sende-Empfängereinheit vorgesehen, die im Dachbereich des Fahrzeugs angeordnet ist. Die dabei zur Bilderkennung erforderliche Auswertung der Ausgangssignale der Sender-Empfängereinheit ist jedoch sehr aufwendig, da nicht nur eine auf dem Sitz befindliche Person von einem unbelebten Gegenstand, wie z.B. einer Tasche oder dergleichen, sondern auch von einem Kindersitz sicher unterschieden werden muß. Während im ersten Fall im Zweifel eine Auslösung der Rückhalteeinrichtung relativ unkritisch ist, darf im zweiten Fall, also wenn sich ein Kindersitz mit einem Kind auf dem Beifahrersitz befindet, die Auslösung der Rückhalteeinrichtung, insbesondere des Airbags, sicher ausgeschlossen sein, da es sonst zu Verletzungen des in dem Kindersitz befindlichen Kindes kommen kann.

So weist die DE 44 33 601 C1 eine Vorrichtung zur Sitzbelegungserkennung auf, wobei die Sensoren im Kopf- oder Schalterbereich des Sitzes angeordnet sind.

Aus der DE 44 42 841 A1 sowie der DE 40 16 610 C2 sind Vorrichtungen zum Erfassen eines Insassen eines Fahrzeugsitzes bekannt, bei der Gewichtssensoren unter anderem auch im Fußraum angeordnet sind, um die Ungenauigkeit des im Sitz befindlichen Drucksensors aufgrund unterschiedlicher Gewichtsverteilung bei unterschiedlichen Sitzpositionen zu kompensieren.

Die DE 40 23 109 A1, die DE 38 02 159 A1 sowie die GB 22 89 332 A weisen wiederum Sensoren im Kopfbereich auf.

Davon ausgehend liegt der Erfindung die Aufgabe zugrunde, ein weiteres Insassenschutzsystem der eingangs genannten Art bereitzustellen, das insbesondere eine zuverlässige Sitzbelegungserkennung auf einfache Weise ermöglicht.

Diese Aufgabe wird bei einem gattungsgemäßen Insassenschutzsystem durch die kennzeichnenden Merkmale des Anspruchs 1 gelöst.

Erfindungsgemäß ist also die Fühlereinrichtung der Sitzbelegungserkennungseinrichtung so angeordnet, daß sie den Fußraum des zu überwachenden Sitzes beobachtet. Die erfindungsgemäße Ausbildung des Insassenschutzsystems hat den Vorteil, daß keine Differenzierung zwischen einer Person und einem Kindersitz erforderlich ist, da auf dem zu überwachenden Sitz befindliche Gegenstände wie Einkaufstaschen oder ähnliches ebenso unberücksichtigt bleiben, wie ein Kindersitz. Ein weiterer Vorteil besteht darin, daß auch in dem Fall eine Auslösung der Rückhalteeinrichtung, insbesondere des Airbags, verhindert wird, wenn der Beifahrer verbotenerweise seine Füße auf das Armaturenbrett legt. In diesem Fall wird der Sitz automatisch als unbelegt erkannt und damit die Auslösung des Airbags verhindert, die zu einer erheblichen Verletzung des Beifahrers führen könnte.

Ein weiterer Vorteil der Erfindung besteht darin, daß die Fühlereinheit zur Überwachung des Fußraum an verschiedenen Montageorten im Kraftfahrzeug, z. B. im Dachbereich oder unterhalb des Armaturenbretts, angeordnet werden kann. Insbesondere brauchen dabei keine zu großen Anforderungen an die Einbaugenauigkeit und die Justierung der den Fußraum überwachenden Fühlereinheit gestellt zu werden, wenn die Fühlereinheit in geringerem Abstand zum zu überwachenden Bereich angeordnet ist, als bei einer Überwachung der Sitzfläche. Hinzukommt, daß auch die Auswertung der von der Fühlereinheit ausgegebenen Signale wesentlich vereinfacht ist. Insbesondere ist es bei der Auswertung der Ausgangssignale der Fühlereinheit nicht erforderlich, unterschiedliche Sitzhöhen, Sitzneigungen und Lehnenwinkel zu berücksichtigen.

Daneben besteht ein weiterer Vorteil darin, daß kein wertvoller Knotenpunkt im Fahrzeuginnenraum für die Montage benötigt wird.

Bei einer besonders vorteilhaften Weiterbildung der Erfindung ist Vorgesehen, daß ein auf die Wärmestrahlung des menschlichen Körpers ansprechender Infrarotempfänger zusätzlich zu einer optischen Sender-Empfänger-Anordnung vorgesehen ist. Hierdurch läßt sich die Verwechselung von Gegenständen mit den Beinen einer auf dem zu überwachenden Sitz befindlichen Person besonders sicher ausschließen.

Weitere vorteilhafte Ausgestaltungen der Erfindung sind in den Unteransprüchen beschrieben.

Die Erfindung wird im folgenden beispielsweise anhand der Zeichnung näher erläutert. In dieser zeigt:
- Fig. 1: ein schematisches Blockschaltbild eines erfindungsgemäßen Insassenschutzsystems,
- Fig. 2: ein vereinfachtes Schaltbild eines Ausgangsschaltkreises einer Auslöseelektronik bei einer anderen Ausgestaltung des erfindungsgemäßen Insassenschutzsystems,
- Fig. 3: eine vereinfachte, schematische Darstellung eines Fahrzeugs zur Veranschaulichung des Einbauortes einer Fühlereinheit einer Sitzbelegungserkennungseinrichtung für ein erfindungsgemäßes Insassenschutzsystem und
- Fig. 4: ein Flußdiagramm der Auswertung der Ausgangssignale der Fühlereinheit.

In den verschiedenen Figuren der Zeichnung sind einander entsprechende Teile mit gleichen Bezugszeichen versehen.

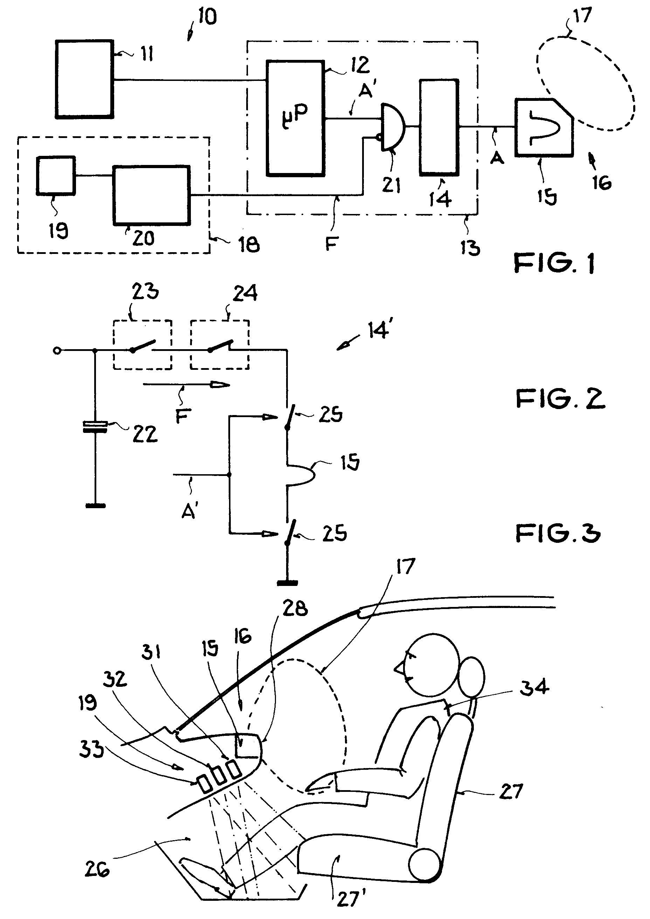

Das erfindungsgemäße Insassenschutzsystem umfaßt, wie Figur 1 zeigt, eine Aufprallerkennungseinrichtung 10 mit einer einen oder mehrere Beschleunigungsaufnehmer umfassenden Beschleunigungsaufnehmeranordnung 11, deren Ausgangssignale an eine Auswerteschaltung 12, die beipielsweise ein Mikroprozessor (mP) sein kann, in einer Auslöseelektronik 13 geliefert werden. Die Auswerteschaltung 12 liefert im Falle eines gefährlichen Aufpralls ein Ausgangssignal A' an einen Ausgangsschaltkreis 14, der daraufhin ein Auslösesignal A abgibt. Das Auslösesignal A von der Auslöseelektronik 13 wird an eine Auslöseeinrichtung 15 einer Schutzeinrichtung 16 geliefert, die z.B. einen Airbag 17 als ein eine Person schützendes Mittel aufweist.

Eine Sitzbelegungserkennungseinrichtung 18 umfaßt eine Fühlereinheit 19, deren Ausgangssignal einer Auswerteschaltung 20 zugeführt ist. Die Auswerteschaltung 20 liefert im dargestellten Ausführungsbeispiel ein Freigabesignal F an eine Torschaltung 21, über die das Ausgangssignal A' der Auswerteschaltung 12 zur Erzeugung eines Auslösesignals A an den Ausgangsschaltkreis 14 der Auslöseelektronik 13 geführt wird. Es ist jedoch auch möglich, das Freigabesignal F direkt einem als Auswerteschaltung 12 der Auslöseelektronik 13 vorgesehenen Mikroprozessor zuzuführen.

Die Auswerteschaltung 12 der Auslöseelektronik 13, die Auswerteschaltung 20 der Sitzbelegungserkennungseinrichtung 18 und die Torschaltung 21 können, wie in Figur 1 dargestellt, durch einzelne Schaltungselemente, wie z.B. Mikroprozessoren und Logikschaltkreise realisiert werden, sie können aber auch in einem Mikroprozessor der Auslöseelektronik 13 gemeinsam vorgesehen sein.

Figur 2 zeigt eine einzelne im Ausgangsschaltkreis 14 der Auslöseelektronik 13 vorgesehene Ausgangsstufe 14' für die Auslöseeinrichtung 15, z.B. die Zündpille eines Gasgenerators für den Airbag 17, in der ein Speicherkondensator 22 über einen mechanischen Sicherheitsschalter 23, einen vom Freigabesignal steuerbaren, normalerweise geschlossenen Schalter 24 und zwei vom Ausgangssignal A' der Auswerteschaltung 12 steuerbare Auslöseschalter 25, mit der Auslöseeinrichtung 15 verbindbar ist. Bei der Ausgestaltung nach Figur 2 wirkt das Freigabesignal F unmittelbar auf die entsprechend ausgelegte Ausgangsstufe 14' ein, so daß hierbei auf die Torschaltung 21 verzichtet werden kann.

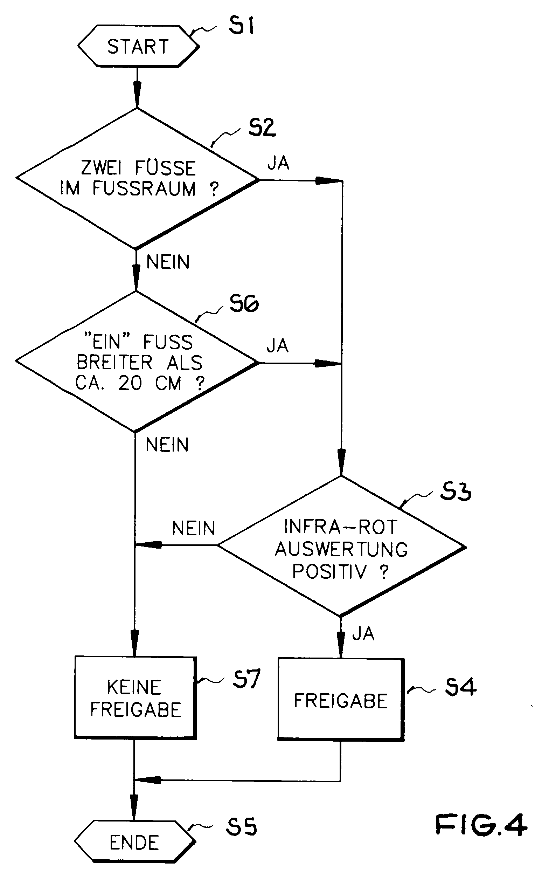

Die Fühlereinheit 19 läßt sich an verschiedenen Montageorten in einem Kraftfahrzeug, z. B. im Dachbereich, anordnen. Besonders vorteilhaft ist es jedoch, wenn die Fühlereinheit 19 der Sitzbelegungserkennungseinrichtung 18 - wie in Figur 3 dargestellt - erfindungsgemäß im Bereich des Fußraums 26 eines zu überwachenden Sitzes 27 beispielsweise unterhalb eines Armaturenbretts oder eines Handschuhfachs 28 in einem Fahrzeug angeordnet ist. Die Fühlereinheit 19 umfaßt eine optische Sender-Empfänger-Anordnung mit einem optischen Sender 31 und einem optischen Empfänger 32, z. B. einen linienförmigen CCD-Bildsensor, sowie vorzugsweise einen passiven Infrarotempfänger 33, der auf die vom Menschen ausgesandte Infrarotstrahlung anspricht. Der linienförmige optische Empfänger 32 ist dabei so angeordnet, daß er im wesentlichen parallel zur Sitzvorderkante 27' des zu überwachenden Sitzes 27 verläuft.

Zur Überwachung des Fußraums 26 sendet der optische Sender 31 periodisch oder kontinuierlich ein Überwachungssignal in einen vor dem Sitz 27 liegenden Bereich aus, das, wenn sich eine Person 34 auf dem zu überwachenden Sitz 27 befindet, an deren Beinen reflektiert wird. Dieses reflektierte Signal wird vom optischen Empfänger 32 vor dem Hintergrund des Bodens des Fahrzeuginnenraums gesehen. Der Empfänger 32 erzeugt entsprechende Empfangssignale, die in der Auswerteschaltung verarbeitet werden. Das Ergebnis dieser Auswertung wird innerhalb der Auswerteschaltung entsprechend Figur 4 gemeinsam mit einem bewerteten Ausgangssignal des Infrarotempfängers 33 zur Erzeugung eines Freigabesignals F bewertet.

Wie Figur 4 zeigt, wird nach dem Start S1 einer Bewertungsroutine im Schritt S2 zunächst gefragt, ob das Ausgangssignal des optischen Empfängers 32 zwei Füße im Fußraum 26 anzeigt. Ist dies der Fall, wird im Schritt S3 überprüft, ob die Auswertung des Infrarotsignals ebenfalls positiv ist, ob sich also die Beine eines Menschen im Fußraum befinden. Ist dies ebenfalls der Fall, so wird der überwachte Sitz 27 als belegt erkannt und im Schritt S4 wird ein die entsprechende Auslöseeinrichtung 15 freigebendes Freigabesignal erzeugt. Damit ist die Bewertungsroutine beendet (S5).

Wird jedoch im Schritt S2 festgestellt, daß sich im Fußraum keine zwei Füße oder Beine befinden, so wird im Schritt S6 überprüft, ob sich ein einzelner Gegenstand im Fußraum 26 befindet, dessen Breite größer als eine bestimmte Breite, z.B. etwa 20 cm, ist. Ist dies nicht der Fall, so wird in Schritt S7 der Fußraum 26 als leer und damit der Sitz als nicht belegt bewertet. Das Freigabesignal F nimmt einen wert an, der die Freigabe verhindert. Daraufhin wird die Bewertungsroutine beendet (S5).

Wird im Schritt S6 ein Gegenstand breiter als die vorgegebene Breite erkannt, so wird zunächst angenommen, daß es sich hierbei um die übereinander geschlagenen Beine einer auf dem zu überwachenden Sitz befindlichen Person handelt. Im Schritt S3 wird daraufhin überprüft, ob die Infrarotauswertung, also die Auswertung des Ausgangssignals des Infrarotempfängers positiv ist, ob also auch das Ausgangssignal des Infrarotempfängers 33 die Beine einer Person anzeigt. Ist dies nicht der Fall, so wird anschließend im Schritt S7 die Freigabe der zugeordneten Auslöseeinrichtung 15 verhindert, während im positiven Fall die Freigabe im Schritt S4 erfolgt.

Durch den Schritt S6 der Bewertungsroutine wird sichergestellt, daß auch in dem Fall, in dem eine auf dem zu überwachenden Sitz befindliche Person ihre Beine übereinander geschlagen hat, diese als Beine erkannt werden können, um die Sitzbelegung sicher zu erfassen.

Die anhand von Figur 4 beschriebene Bewertungsroutine wird zu einer kontinuierlichen oder quasi-kontinuierlichen Überwachung der Sitzbelegung in geeigneten Abständen wiederholt. Hierdurch wird gewährleistet, daß während des Fahrzeugbetriebs sicher erkannt wird, wenn eine auf dem überwachten Sitz befindliche Person aus einer erlaubten in eine verbotene Sitzposition und zurück wechselt. Dementsprechend wird die Auslösbarkeit der zugeordneten Schutzeinrichtung in Abhängigkeit von der Sitzposition der zu schützenden Person freigegeben oder gesperrt.

Obwohl bei dem beschriebenen, bevorzugten Ausführungsbeispiel der Erfindung die Fühlereinheit 19 der Sitzbelegungserkennungseinrichtung 18 neben der optischen Sender-Empfänger-Anordnung 31, 32 einen Infrarotempfänger 33 aufweist, ist es auch möglich, die Erfindung nur mit der optischen Sender-Empfänger-Anordnung 31, 32 zu realisieren. Obwohl in diesem Fall der Schritt S3 in der Bewertungsroutine nach Fig. 4, also die Infrarotüberwachung, entfällt, wird die Sicherheit einer auf dem überwachten Sitz befindlichen Person nicht beeinträchtigt.

Anstelle der beschriebenen optischen Sender-Empfänger-Anordnung 31, 32 kann bei dem erfindungsgemäßen Insassenschutzsystem auch eine akustische, z. B. mit Ultraschall arbeitende Fühlereinheit 19 eingesetzt werden. Weiter ist es möglich, eine Infrarotsender-Empfängereinheit einzusetzen, um den Fußraum 26 des zu überwachenden Sitzes zu beobachten. Wenn eine insbesondere auf die menschliche Wärmestrahlung ansprechende Infrarotempfängereinheit eingesetzt wird, deren Ausgangssignale für eine Bilderkennung geeignet sind, ist eine besonders sichere Erkennung einer Sitzbelegung realisierbar.

## Patentansprüche

1. Insassenschutzsystem für Fahrzeuge zur Personenbeförderung,
mit einer Aufprallerkennungseinrichtung zum Feststellen eines gefährlichen Aufpralls des Fahrzeugs,
mit wenigstens einer einem bestimmten Sitz zugeordneten Schutzeinrichtung, die zumindest ein eine auf dem Sitz befindliche Person im Falle eines gefährlichen Aufpralls schützendes Mittel und eine diesem zugeordnete Auslöseeinrichtung umfaßt, der von der Aufprallerkennungseinrichtung ein Auslösesignal zuführbar ist, und
mit einer Sitzbelegungserkennungseinrichtung, die mindestens eine dem bestimmten Sitz zugeordnete Fühlereinheit und mindestens eine mit einem Ausgang der Fühlereinheit verbundene Auswerteschaltung umfaßt, die ein Freigabesignal für die dem bestimmten Sitz zugeordnete Schutzeinrichtung an die Aufprallerkennungseinrichtung liefert, wenn die Auswertung der Ausgangssignale der Fühlereinrichtung ergibt, das der überwachte Sitz von einer Person belegt ist,
**dadurch gekennzeichnet,**
daß mindestens eine der Fühlereinheiten (19) als optische Sender-Empfänger-Anordnung (31, 32) ausgestaltet und auf den Fußraum gerichtet ist.

2. Insassenschutzsystem nach Anspruch 1, dadurch **gekennzeichnet,** daß die Fühlereinheit (19) so angeordnet ist, daß sie den Fußraum (26) nahe der Sitzvorderkante (27) unterhalb von dieser beobachtet.

3. Insassenschutzsystem nach Anspruch 1 oder 2, dadurch **gekennzeichnet,** daß die Fühlereinheit (19) eine optische Sender-Empfänger-Anordnung (31, 32) umfaßt.

4. Insassenschutzsystem nach Anspruch 3, dadurch **gekennzeichnet,** daß der linienförmige Empfänger (32) parallel zur Sitzvorderkante (27') angeordnet ist.

5. Insassenschutzsystem nach einem der Ansprüche 1 bis 4, dadurch **gekennzeichnet,** daß die Fühlereinheit (19) einen auf die Wärmestrahlung des menschlichen Körpers ansprechenden Infrarotempfänger (33) umfaßt.

6. Insassenschutzsystem nach Anspruch 5, dadurch **gekennzeichnet,** daß der Infrarotempfänger (33) zusätzlich zur optischen Sender-Empfänger-Anordnung (31, 32) vorgesehen ist.

7. Insassenschutzsystem nach Anspruch 5, dadurch **gekennzeichnet,** daß der Infrarotempfänger (33) eine Vielzahl von linienförmig angeordneten Infrarotempfängerelementen aufweist.
